# DEMANDE DE BREVET EUROPEEN

(11) **EP 4 431 362 A1**
(43) Date de publication de la demande: **18.09.2024**
(21) Numéro de dépôt: 23305348.7
(22) Date de dépôt: 14.03.2023
(51) Int. Cl.: B61D 35/00, B61D 1/06, B60R 15/04, B64D 11/02, E03F 1/00

(54) **SYSTÈME DE TOILETTES SOUS VIDE ET VOITURE D'UN VÉHICULE DESTINÉ AU TRANSPORT DE PASSAGERS**

(71) Demandeur: SpeedInnov, 75008 Paris (FR)
(72) Inventeur: LENEUTRE, Valentin, 17290 LE THOU (FR)
(74) Mandataire: Lavoix

(57) **Abrégé**

Un système de toilettes sous vide (20) installé dans un véhicule (10) comprend :
- un réservoir d'eaux usées (22),
- au moins une cuvette de toilettes (24, 25) installée dans une cabine de toilettes (18, 19),
- un dispositif de mise sous vide (26) comprenant une pompe de mise à vide (32) pour l'aspiration des eaux usées de chaque cuvette de toilettes (24, 25) vers le réservoir d'eaux usées (22), le dispositif de mise sous vide (26) possédant une configuration inactive et une configuration active,
- un dispositif de détection (28) configuré pour détecter la présence d'un passager dans chaque cabine de toilettes (18, 19) et étant configuré pour commander le passage du dispositif de mise sous vide (26) de la configuration inactive à la configuration active.

## Description

La présente invention concerne un système de toilettes sous vide, installé dans un véhicule destiné au transport de passagers.

Dans les véhicules destinés au transport de passagers, comme les véhicules ferroviaires, et en particulier les trains, il est connu d'installer des systèmes de toilettes sous vide.

Un système de toilettes sous vide comprend généralement une cuvette de toilettes reliée par une conduite à système d'évacuation composé d'un réservoir d'eaux usées et d'une pompe de mise à vide apte à générer une dépression dans le réservoir d'eaux usées pour aspirer des eaux usées de la cuvette de toilettes vers le réservoir d'eaux usées.

Généralement, la pompe de mise à vide est activée afin de conserver un niveau de dépression dans le réservoir d'eaux usées supérieur à un seuil prédéterminé, notamment nécessaire à l'aspiration des eaux usées de la cuvette de toilettes vers le réservoir d'eaux usées, par exemple dans le cas où une commande d'évacuation (ou « chasse d'eau ») associée à la cuvette de toilettes est déclenchée.

En pratique, dans un train par exemple, la commande d'évacuation est déclenchée environ toutes les 10 minutes pendant 30 secondes, ce qui signifie que le niveau de dépression dans le réservoir d'eaux usées est conservé supérieur au seuil prédéterminé de manière inutile pendant 9 minutes et 30 secondes.

Par ailleurs, en raison des fuites d'air intrinsèques au fonctionnement du système de toilettes sous vide, le niveau de dépression dans le réservoir d'eaux usées diminue continuellement. Par conséquent, la pompe de mise à vide est activée, par exemple toutes les deux minutes, afin de conserver un niveau de dépression dans le réservoir d'eaux usées supérieur au seuil prédéterminé.

Cette activation superflue de la pompe de mise à vide entraine une usure nonnécessaire des composants du système de toilettes sous vide et entraine également une consommation d'air comprimé et une consommation d'électricité inutiles.

Un des buts de l'invention est de proposer un système de toilettes sous vide adapté pour éviter une usure précoce de ses composants, tout en réduisant la consommation d'air comprimé et la consommation d'électricité.

A cet effet, l'invention a pour objet un système de toilettes sous vide installé dans un véhicule destiné au transport de passagers, comprenant :
- un réservoir d'eaux usées,
- au moins une cuvette de toilettes, chaque cuvette de toilettes étant installée dans une cabine de toilettes respective et raccordée au réservoir d'eaux usées pour l'évacuation des eaux usées de la cuvette de toilettes vers le réservoir d'eaux usées,
- un dispositif de mise sous vide comprenant une pompe de mise à vide raccordée au réservoir d'eaux usées pour générer une dépression dans le réservoir d'eaux usées pour l'aspiration des eaux usées de chaque cuvette de toilettes vers le réservoir d'eaux usées, le dispositif de mise sous vide possédant une configuration inactive et une configuration active,
- un dispositif de détection configuré pour détecter la présence d'un passager dans chaque cabine de toilettes, le dispositif détection étant configuré pour commander le passage du dispositif de mise sous vide de la configuration inactive à la configuration active lorsque que la présence d'un passager dans une cabine de toilettes est détectée.

Grâce au dispositif de détection, le dispositif de mise sous vide est passé en configuration active uniquement lorsque que la présence d'un passager dans la cabine de toilettes est détectée. Or, si un passager est présent dans la cabine de toilettes, cela signifie que la commande d'évacuation (ou « chasse d'eau ») associée à la cuvette de toilettes va probablement être déclenchée et donc que le niveau de dépression dans le réservoir d'eaux usées doit être supérieur à un seuil prédéterminé afin d'assurer l'aspiration des eaux usées de la cuvette de toilettes vers le réservoir d'eaux usées. La pompe de mise à vide fonctionne ainsi uniquement lorsque cela est nécessaire, ce qui permet d'éviter une usure précoce de la pompe de mise à vide, tout en réduisant la consommation d'air comprimé et la consommation d'électricité.

Dans des modes de réalisation particuliers, le système de toilettes sous vide comprend une ou plusieurs des caractéristiques optionnelles suivantes, prise(s) individuellement ou suivant toute combinaison techniquement possible :
- Le dispositif de détection est configuré pour commander le passage du dispositif de mise sous vide de la configuration active à la configuration inactive lorsque plus aucun passager n'est détecté dans une cabine de toilettes et/ou après une période de temps défini sans détection de la présence d'un passager dans l'une des cabines de toilettes.
- Le dispositif de détection comprend, pour chaque cabine de toilettes, au moins un capteur de présence apte à détecter la présence d'un passager dans cette cabine de toilettes.
- Chaque capteur de présence est choisi parmi un capteur détectant l'ouverture et/ou la fermeture d'une porte d'accès de la cabine de toilettes, un capteur détectant le verrouillage et/ou le déverrouillage d'un dispositif de verrouillage de la porte d'accès de la porte de la cabine de toilettes, un capteur détectant l'appui sur un bouton installé dans la cabine de toilettes, notamment un bouton d'activation d'un sèche-main ou d'un robinet installé dans la cabine de toilettes, et un capteur de mouvement.

- La pompe de mise à vide est une pompe pneumatique.
- La pompe de mise à vide est une trompe à eau configurée pour créer une dépression par effet Venturi.
- Le système de toilettes sous vide comprend un filtre à odeur disposé entre le réservoir d'eaux usées et la pompe de mise à vide.
- Le système de toilettes sous vide comprend deux cuvettes de toilettes.

L'invention a également pour objet une voiture d'un véhicule destiné au transport de passagers, comprenant au moins un système de toilettes sous vide tel que décrit précédemment.

Dans un mode de réalisation particulier, la voiture comprend un premier étage et un deuxième étage, le système de toilettes sous vide comprenant deux cuvettes de toilettes, l'une des deux cuvettes de toilettes étant installée dans une cabine de toilettes située au premier étage et l'autre des deux cuvettes de toilettes étant installée dans une cabine de toilettes située au deuxième étage.

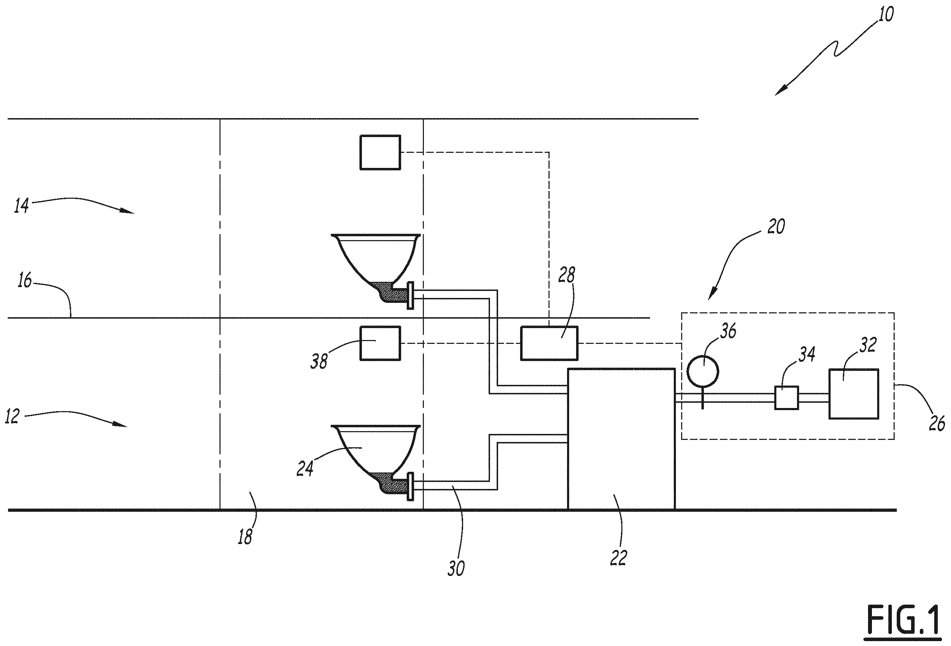

L'invention et ses avantages seront mieux compris à la lecture de la description qui va suivre, donnée uniquement à titre d'exemple non limitatif, et faite en se référant au dessin annexé, sur lequel [Fig 1] la figure 1 est une représentation schématique de côté de l'intérieur d'une voiture d'un véhicule comprenant un système de toilettes sous vide.

La figure 1 illustre l'intérieur d'une voiture 10 d'un véhicule de transport de passagers.

Le véhicule est par exemple un véhicule ferroviaire tel qu'un train, en particulier un train longue distance. En variante, le véhicule est un véhicule routier, en particulier un car ou un bus.

La voiture 10 comprend un premier étage 12 et un deuxième étage 14, de préférence superposés. Le premier étage 12 et le deuxième étage 14 sont en particulier séparés l'un de l'autre par une paroi intérieure 16.

Le premier étage 12 est par exemple situé au-dessus du deuxième étage 14. La paroi intérieure 16 définit alors un plafond du premier étage 12 et un plancher du deuxième étage 14. En variante, la configuration est inversée, le premier étage 12 étant situé au-dessous du deuxième étage 14.

Par exemple, le premier étage 12 définit une salle de passagers destinée à accueillir des passagers et/ou le deuxième étage 14 définit une salle de passagers destinée à accueillir des passagers.

La voiture 10 comprend au moins une cabine de toilettes 18, et de préférence au moins deux cabines de toilettes 18, 19.

Une des deux cabines de toilettes 18 est par exemple agencée au premier étage 12 et l'autre des deux cabines de toilettes 19 est agencée au deuxième étage 14. Les deux cabines de toilettes 18, 19 sont par exemple agencées l'une au-dessus de l'autre et sont séparées par la paroi intérieure 16.

La voiture 10 comprend un système de toilette sous vide 20 comprenant un réservoir d'eaux usées 22, au moins une cuvette de toilettes 24, un dispositif de mise sous vide 26 et un dispositif de détection 28.

Le réservoir d'eaux usées 22 est disposé de préférence à celui du premier étage 12 et du deuxième étage 14 qui est le niveau inférieur, de sorte à faciliter sa vidange lors d'opérations de manutention.

Le réservoir d'eaux usées 22 est par exemple une cuve en acier inoxydable de contenance comprise entre 150 L et 700 L.

Le système de toilette sous vide 20 comprend de préférence deux cuvettes de toilettes 24, 25.

Chaque cuvette de toilettes 24, 25 est de préférence installée dans une cabine de toilettes 18, 19 respective.

Plus précisément, l'une des deux cuvettes de toilettes 24 est installée dans la cabine de toilettes 18 située au premier étage 12 et l'autre des deux cuvettes de toilettes 25 est installée dans la cabine de toilettes 19 située au deuxième étage 14 de la voiture 10.

Comme cela est visible sur la figure 1, chaque cuvette de toilettes 24, 25 est raccordée au réservoir d'eaux usées 22 pour l'évacuation des eaux usées de la cuvette de toilettes 24, 25 vers le réservoir d'eaux usées 22, par exemple par une conduite 30, 31.

Chacune des conduite 30, 31 relie fluidiquement une des deux cuvettes de toilettes 24, 25 au réservoir d'eaux usées 22, et en particulier permet l'écoulement des eaux usées de ladite cuvette de toilettes 24, 25 au réservoir d'eaux usées 22, notamment lorsqu'une commande d'évacuation (ou « chasse d'eau ») associée à ladite cuvette de toilettes 24, 25 est déclenchée.

Le dispositif de mise sous vide 26 comprend au moins une pompe de mise à vide 32 raccordée au réservoir d'eaux usées 22 pour générer une dépression dans le réservoir d'eaux usées 22 pour l'aspiration des eaux usées de chacune des deux cuvettes de toilettes 24, 25 vers le réservoir d'eaux usées 22, par exemple via la conduite 30, 31 respective.

La pompe de mise à vide 32 est de préférence une pompe pneumatique.

En particulier, la pompe de mise à vide 32 est une trompe à eau configurée pour créer une dépression par effet Venturi.

Avantageusement, le dispositif de mise sous vide 26 comprend, en outre, un filtre à odeur 34 disposé entre le réservoir d'eaux usées 22 et la pompe de mise à vide 32.

De préférence, le dispositif de mise sous vide 26 comprend, en outre, un capteur de pression 36 configuré pour mesurer le niveau de dépression P dans le réservoir d'eaux usées 22.

Le dispositif de mise sous vide 26 possède une configuration inactive et une configuration active.

En configuration active, le dispositif de mise sous vide 26 est configuré pour mesurer le niveau de dépression P dans le réservoir d'eaux usées 22, par exemple à l'aide du capteur de pression 36, et, de préférence, le comparer à un seuil prédéterminé δ, et pour commander l'activation la pompe de mise à vide 32 en fonction du niveau de dépression P mesurée, en particulier, en fonction de la comparaison du niveau de dépression P mesurée avec le seuil prédéterminé δ, pour générer une dépression dans le réservoir d'eaux usées 22

Le seuil prédéterminé δ est par exemple défini comme le niveau de dépression P dans le réservoir d'eaux usées 22 nécessaire à l'aspiration des eaux usées de chacune des deux cuvettes de toilettes 24, 25 vers le réservoir d'eaux usées 22, notamment dans le cas où une commande d'évacuation (ou « chasse d'eau ») associée à l'une des cuvettes de toilettes 24, 25 est déclenchée.

Dans le cas où le niveau de dépression P est inférieur au seuil prédéterminé δ, par exemple en raison d'une fuite d'air ou suite au déclenchement de la commande d'évacuation (ou « chasse d'eau ») associée à l'une des deux cuvettes de toilettes 24, 25, le dispositif de mise sous vide 26 est configuré pour activer la pompe de mise à vide 32 pour générer une dépression dans le réservoir d'eaux usées 22 de sorte que le niveau de dépression P dans le réservoir d'eaux usées 22 soit supérieur au seuil prédéterminé δ.

En configuration inactive, le dispositif de mise sous vide 26 est configuré pour maintenir la pompe de mise à vide 32 inactive en permanence, même dans le cas où le niveau de dépression P est inférieur au seuil prédéterminé δ.

De préférence, en configuration inactive le dispositif de mise sous vide 26 est configuré pour désactiver la mesure du niveau de dépression P dans le réservoir d'eau usées 22.

Le dispositif de détection 28 est configuré pour détecter la présence d'un passager dans chaque cabine de toilettes 18, 19.

A cet effet, le dispositif de détection 28 comprend de préférence, pour chaque cabine de toilettes 18, 19, au moins un capteur de présence 38, 39 apte à détecter la présence d'un passager dans cette cabine de toilettes 18, 19.

Le dispositif de détection 28 comprend par exemple un capteur de présence 38, 39 qui est un capteur détectant l'ouverture et/ou la fermeture d'une porte d'accès de la cabine de toilettes 18, 19.

En variante ou en complément facultatif, le dispositif de détection 28 comprend un capteur de présence 38, 39 qui est un capteur détectant le verrouillage et/ou le déverrouillage d'un dispositif de verrouillage de la porte d'accès de la cabine de toilettes 18, 19.

En variante ou en complément facultatif, le dispositif de détection 28 comprend un capteur de présence 38, 39 qui est un capteur détectant l'appui sur un bouton installé dans la cabine de toilettes 18, 19, notamment un bouton d'activation d'un sèche-main ou d'un robinet installé dans la cabine de toilettes 18, 19.

En variante ou en complément facultatif, le dispositif de détection 28 comprend un capteur de présence 38, 39 qui est un capteur de mouvement, par exemple apte à détecter le mouvement d'un passager dans la cabine de toilettes 18, 19.

Chaque capteur de présence 38, 39 est par exemple en communication avec une unité électronique de commande 40 du dispositif de détection 28, par une liaison filaire ou une liaison sans fil, par exemple une liaison Bluetooth^{®}, Wifi^{®} ou autre, comme schématisé en pointillé sur la Figure 1.

Le dispositif détection 28, et en particulier son unité électronique de commande 40, est configuré(e) pour commander le passage du dispositif de mise sous vide 26 de la configuration inactive à la configuration active lorsque que la présence d'un passager dans au moins une des cabines de toilettes 18, 19 est détectée par le dispositif de détection 28.

Avantageusement, le dispositif de détection 28, et en particulier son unité électronique de commande 40, est configuré(e) pour commander le passage du dispositif de mise sous vide 26 de la configuration active à la configuration inactive lorsque plus aucun passager n'est détecté dans chaque cabine de toilette 18, 19, par exemple lorsque un capteur de présence 38, 39 détecte la fermeture de la porte d'accès de la cabine de toilettes 18, 19 ou lorsque un capteur de présence 38, 39 détecte le verrouillage de la porte d'accès de la cabine de toilettes 18, 19.

Alternativement ou en complément facultatif, le dispositif de détection 28, et en particulier son unité électronique de commande 40, est configuré(e) pour passer le dispositif de mise sous vide 26 de la configuration active à la configuration inactive après une période de temps définie sans détection de la présence d'un passager dans l'une des cabines de toilettes 18, 19, par exemple après une période de temps comprise entre 3 min et 7 min.

Un tel système de toilette sous vide 20 présente l'avantage de passer le dispositif de mise sous vide 26 en configuration active uniquement lorsque que la présence d'un passager dans l'un des cabines de toilettes 18, 19 est détectée, c'est-à-dire lorsqu'il est nécessaire que le niveau de dépression P dans le réservoir d'eaux usées 22 soit supérieur au seuil prédéterminé δ afin de permettre l'aspiration des eaux usées de la cuvette de toilettes 24, 25 vers le réservoir d'eaux usées 22. Le dispositif de mise sous vide 26 reste en configuration inactive, lorsqu'un tel niveau de dépression P dans le réservoir d'eaux usées 22 n'est pas nécessaire.

La pompe de mise à vide 32 fonctionne ainsi uniquement lorsque cela est nécessaire, ce qui permet d'éviter son usure précoce, tout en réduisant la consommation d'air comprimé et la consommation d'électricité.

## Revendications

1. Système de toilettes sous vide (20), installé dans un véhicule (10) destiné au transport de passagers, comprenant :
- un réservoir d'eaux usées (22),
- au moins une cuvette de toilettes (24, 25), chaque cuvette de toilettes (24, 25) étant installée dans une cabine de toilettes (18, 19) respective et raccordée au réservoir d'eaux usées (22) pour l'évacuation des eaux usées de la cuvette de toilettes (24, 25) vers le réservoir d'eaux usées (22),
- un dispositif de mise sous vide (26) comprenant une pompe de mise à vide (32) raccordée au réservoir d'eaux usées (22) pour générer une dépression dans le réservoir d'eaux usées (22) pour l'aspiration des eaux usées de chaque cuvette de toilettes (24, 25) vers le réservoir d'eaux usées (22), le dispositif de mise sous vide (26) possédant une configuration inactive et une configuration active,
- un dispositif de détection (28) configuré pour détecter la présence d'un passager dans chaque cabine de toilettes (18, 19), le dispositif de détection (28) étant configuré pour commander le passage du dispositif de mise sous vide (26) de la configuration inactive à la configuration active lorsque la présence d'un passager dans une cabine de toilettes (18, 19) est détectée.

2. Système de toilettes sous vide (20) selon la revendication 1, dans lequel le dispositif de détection (28) est configuré pour commander le passage du dispositif de mise sous vide (26) de la configuration active à la configuration inactive lorsque plus aucun passager n'est détecté dans une cabine de toilettes (18, 19) et/ou après une période de temps défini sans détection de la présence d'un passager dans l'une des cabines de toilettes (18, 19).

3. Système de toilettes sous vide (20) selon la revendication 1 ou 2, dans lequel le dispositif de détection (28) comprend, pour chaque cabine de toilettes (18, 19), au moins un capteur de présence (38, 39) apte à détecter la présence d'un passager dans cette cabine de toilettes (18, 19).

4. Système de toilettes sous vide (20) selon la revendication 3, dans lequel chaque capteur de présence (38, 39) est choisi parmi un capteur détectant l'ouverture et/ou la fermeture d'une porte d'accès de la cabine de toilettes (18, 19), un capteur détectant le verrouillage et/ou le déverrouillage d'un dispositif de verrouillage de la porte d'accès de la porte de la cabine de toilettes (18, 19), un capteur détectant l'appui sur un bouton installé dans la cabine de toilettes (18, 19), notamment un bouton d'activation d'un sèche-main ou d'un robinet installé dans la cabine de toilettes (18, 19), et un capteur de mouvement.

5. Système de toilettes sous vide (20) selon l'une quelconque des revendications précédentes, dans lequel la pompe de mise à vide (32) est une pompe pneumatique.

6. Système de toilettes sous vide (20) selon l'une quelconque des revendications précédentes, dans lequel la pompe de mise à vide (32) est une trompe à eau configurée pour créer une dépression par effet Venturi.

7. Système de toilettes sous vide (20) selon l'une quelconque des revendications précédentes, comprenant un filtre à odeur (34) disposé entre le réservoir d'eaux usées (22) et la pompe de mise à vide (32).

8. Système de toilettes sous vide (20) selon l'une quelconque des revendications précédentes, comprenant deux cuvettes de toilettes (24, 25).

9. Voiture (10) d'un véhicule destiné au transport de passagers, comprenant au moins un système de toilettes sous vide (20) selon l'une quelconque des revendications précédentes.

10. Voiture (10) selon la revendication 9, comprenant un premier étage (12) et un deuxième étage (14), le système de toilettes sous vide (20) comprenant deux cuvettes de toilettes (24, 25), l'une des deux cuvettes de toilettes (24) étant installée dans une cabine de toilettes (18) située au premier étage (12) et l'autre des deux cuvettes de toilettes (25) étant installée dans une cabine de toilettes (19) située au deuxième étage (14).
